# EUROPÄISCHE PATENTSCHRIFT

(11) **EP 0 834 424 B1**
(45) Veröffentlichungstag und Bekanntmachung des Hinweises auf die Patenterteilung: **03.11.2004**
(21) Anmeldenummer: 97114698.0
(22) Anmeldetag: 25.08.1997
(51) Int. Cl.: B60R 1/12

(54) **Überwachungseinrichtung für schwer oder nicht einsehbare Zonen um Kraftfahrzeuge**
Monitoring device of blind and visible zones around vehicles
Dispositif de surveillance de zones non-visibles ou difficilement visibles autour de véhicules

(30) Priorität: 07.10.1996 DE 29617413 U
(43) Veröffentlichungstag der Anmeldung: 08.04.1998
(73) Patentinhaber: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE)
(74) Vertreter: Hübner, Gerd, Dipl.-Phys.

(56) Entgegenhaltungen:
- EP-A- 0 370 965
- EP-A- 0 381 016
- EP-A- 0 591 743
- WO-A-85/01114
- WO-A-94/05525
- WO-A-95/25322
- DE-A- 4 228 794
- US-A- 5 339 075

## Beschreibung

Die Erfindung betrifft eine Überwachungseinrichtung für schwer- oder nicht einsehbare Zonen um Kraftfahrzeuge, insbesondere für die Beifahrerseite von Nutzfahrzeugen oder auch den Totwinkelbereich vor der Fahrzeugfront.

Eine derartige Überwachungseinrichtung ausschließlich für Spiegel-Totwinkelbereiche ist beispielsweise aus der DE 44 10 620 A1 bekannt und weist einen Strahlungssensor z.B. in Form eines Ultraschall- oder Infrarotsensors zur Erfassung eines sich in der überwachten Zone aufhaltenden Objekts auf. Ferner ist eine für solche Sensoren übliche Steuerung für den Betrieb des Sensors und die Verarbeitung der vom Sensor erzeugten Signale vorgesehen. Mit dieser Steuerung ist eine vom Fahrzeugführer wahrnehmbare Warnanzeige gekoppelt, die dem Fahrzeugführer ein Ansprechen des Sensors auf ein in der überwachten Zone erfaßtes Objekt signalisiert.

Mit dieser Art von Überwachungseinrichtung ist es grundsätzlich möglich, im Totwinkelbereich des Außenspiegels auf der Beifahrerseite befindliche Verkehrsteilnehmer, wie Radfahrer, Motorradfahrer oder Fußgänger zu erfassen und den Fahrer auf diese aufmerksam zu machen. Problematisch hierbei ist jedoch, daß die für die Überwachungseinrichtung verwendeten Erfassungssensoren herkömmlicherweise auf Bewegung reagieren, wobei der Sensor naturgemäß nicht selektieren kann, ob sich das zu erfassende Objekt gegenüber dem ruhenden Kraftfahrzeug oder umgekehrt das Kraftfahrzeug gegenüber einem Objekt bewegt. Insofern spricht die bekannte Überwachungseinrichtung im Fahrbetrieb auch auf am Fahrbahnrand stehende Hindernisse, wie Verkehrsschilder, Ampelpfosten, oder dergleichen an. Dies hat zur Folge, daß die Warnanzeige unnötigerweise oft aktiviert wird. Dies führt zu einem gefährlichen Gewöhnungseffekt beim Fahrer, der der Warnanzeige mit zunehmender Verwendungsdauer immer weniger Bedeutung beimißt, bis die Überwachungseinrichtung schließlich keinen praktischen Wert mehr hat.

Aus der US 5,339,075 A ist eine Überwachungseinrichtung für den rechten Spiegel-Totwinkelbereich bekannt, deren Doppler-Erfassungssensor bei einer bestimmten Geschwindigkeit des Fahrzeuges selbst aktiv ist. Es ist ein Fahrzeuggeschwindigkeits-Sensor vorgesehen, der mit einem Audio-Verstärker einer akustischen Wameinrichtung verbunden ist. Eine Deaktivierung der Warneinrichtung wird genau dann vorgenommen, wenn die Fahrzeuggeschwindigkeit unter einen vorbestimmten Wert von beispielsweise 10 Meilen/Stunde fällt. Zu höheren Geschwindigkeitsbereichen hin findet keine Deaktivierung der Warneinrichtung statt. Zweck dieser Überwachungseinrichtung ist die Verhinderung von Fahrzeugkollisionen, die beim Wechseln von Fahrspuren stattfinden. Insoweit ist diese Überwachungseinrichtung nicht für die Totwinkelüberwachung der Beifahrerseite von Nutzfahrzeugen zum Schutz von Radfahrern, Motorradfahrern oder Fußgängern einsetzbar.

Die EP 0 370 965 A offenbart eine Einrichtung zur Detektion der Relativgeschwindigkeit zweier Fahrzeuge, ebenfalls hauptsächlich zum Verhindern von Kollisionen. Dabei wird der Geschwindigkeitsbereich, in dem eine Warnfunktion erfüllt wird, nach der Geschwindigkeit des von der Überwachungseinrichtung erfaßten Fremd-Fahrzeuges bestimmt, so daß hier dem eingangs geschilderten Problem des Rad-, Motorradfahrer- oder Schutzgängerschutzes kein Augenmerk geschenkt wird.

Aus der WO 85/01114 A ist eine Überwachungseinrichtung zur Abtastung des Totwinkelbereiches von Fahrzeugrückspiegeln bekannt, bei der als Auswahlkriterium für die Aktivierung und Deaktivierung der Überwachungseinrichtung lediglich die Betätigung des Blinkerhebels genannt wird. Dies ist sicherheitstechnisch bedenklich, da bei Nichtbetätigung des Blinkers keine Totwinkelüberwachung stattfindet.

Ausgehend von den vorstehend geschilderten Problemen des Standes der Technik liegt der Erfindung die Aufgabe zugrunde, die Überwachungseinrichtung so zu verbessern, daß die eigentliche Warnfunktion erhalten bleibt.

Diese Aufgabe wird laut Kennzeichnungsteil des Anpruches 1 durch eine Auslegung der Überwachungseinrichtung dahingehend gelöst, daß der Sensor und/oder die Warnanzeige nur in einem Geschwindigkeitsbereich des mit Überwachungseirichtung versehenen Kraftfahrzeuges zwischen Fahrzeugstillstand und einer vorgegebenen Grenzgeschwindigkeit arbeitet. Durch diese Auslegung ist die Überwachungseinrichtung nur dann aktiviert, wenn sicherheitstechnisch kritische Zustände vorliegen, wie z.B. beim Stehen und ausschließlichen Anfahren an einer Ampel oder beim Rechtsabbiegen, wo es schon zu vielen schweren Unfällen gekommen ist, wenn vom Fahrzeugführer ein auf der Beifahrerseite eines Nutzfahrzeuges passierender Fahrrad- oder Mofafahrer übersehen wurde.

Deroben erwähnte Geschwindigkeitsbereich liegt zwischen Fahrzeugstillstand und einer Grenzgeschwindigkeit von 15 km/h bis 30 km/h, da sich - wie Statistiken zeigen - in diesem Geschwindigkeitsbereich die Mehrzahl der durch die Überwachungseinrichtung zu vermeidenden Unfälle ereignen.

Als bevorzugter Ort für die Überwachung der Beifahrerseite bietet sich der Einbau des Erfassungssensors in den beifahrerseitigen Rückblickspiegel an, wobei eine Integration in den bodenseitigen Rand des Spiegelgehäuses hinsichtlich des Zugriffs auf die zu überwachende Zone auf der Beifahrerseite eines Nutzfahrzeuges vorteilhaft ist.

Als Erfassungssensoren sind Strahlungssensoren in Form von Infrarot-Bewegungsmeldern oder Ultraschallsensoren einsetzbar, die für ähnliche Überwachungsaufgaben - etwa bei der Gebäudeüberwachung, in Alarmanlagen oder dergleichen- üblich sind.

Die Warnanzeige kann in Form von optischen und/oder akustischen Anzeigen ausgestaltet sein. Im Falle einer optischen Anzeige kann diese in das Armaturenbrett des Fahrzeuges und/oder den Spiegel eingebaut sein.

Weitere Merkmale, Einzelheiten und Vorteile der Erfindung sind der nachfolgenden Beschreibung entnehmbar, in der ein Ausführungsbeispiel anhand der beigefügten Zeichnungen näher erläutert wird. Es zeigen:
- Fig. 1: eine schematische Draufsicht auf einen Nutzfahrzeuge mit einer erfindungsgemäßen Überwachungseinrichtung,
- Fig. 2: eine Seitenansicht dieses Nutzfahrzeuges,
- Fig. 3: eine schematische Seitenansicht eines Reisebusses,
- Fig. 4: einen Vertikalschnitt durch einen Nutzfahrzeug-Rückblickspiegel mit integriertem Erfassungssensor und
- Fig. 5: eine Ansicht des Rückblickspiegels aus Pfeilrichtung V gemäß Fig. 4.

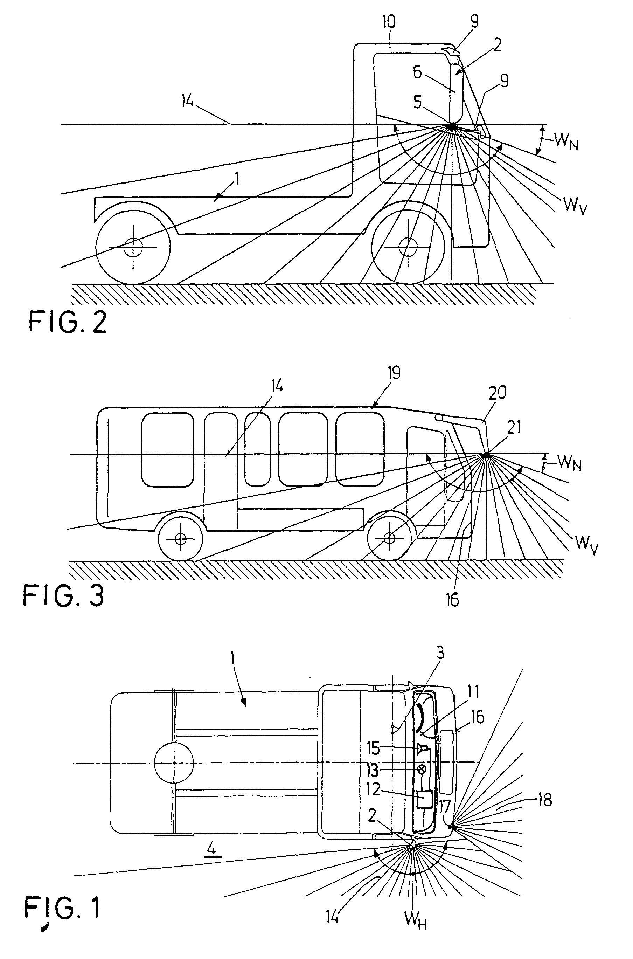

Das in Fig. 1 und 2 schematisch dargestellte Nutzfahrzeug 1 in Form einer Sattelzugmaschine weist einen beifahrerseitigen Rückblickspiegel 2 auf, mit dem der durch die beiden Augenpunkte 3 angedeutete Fahrer den auf der Beifahrerseite des Nutzfahrzeugs angrenzenden Bereich visuell überwacht. Der über den Spiegel einsehbare Bereich ist dabei in bekannter Weise beschränkt, z.B. kann die unterhalb des Spiegels auf Fahrerhaushöhe liegende Zone nicht visuell erfaßt werden.

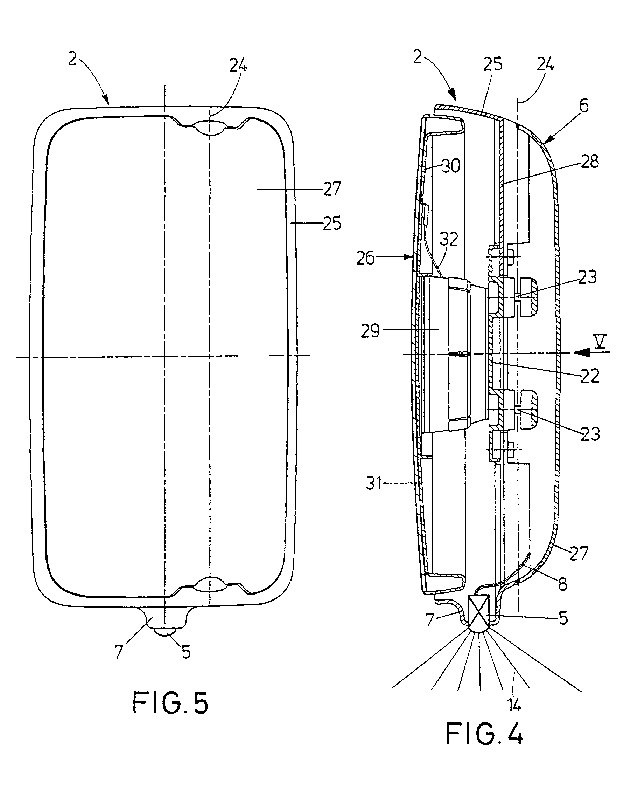

Um nun eine Überwachung der gesamten auf der Beifahrerseite des Nutzfahrzeuges liegenden Zone 4 zu ermöglichen, ist in dem Nutzfahrzeug eine Überwachungseinrichtung eingebaut, die als Hauptelement einen Infrarot-Bewegungsmelder 5 aufweist. Wie aus Fig. 4 und 5 deutlich wird, ist dieser Bewegungsmelder 5 am unteren Rand des Spiegelgehäuses 6 in einem nach unten ragenden Lagervorsprung 7 eingebaut. Über ein kombiniertes Steuerund Signalkabel 8, das durch das Spiegelgehäuse 6 über den Spiegelhalter 9 zum Führerhaus 10 des Nutzfahrzeuges geführt ist, steht der Infrarot-Bewegungsmelder mit einer im Armaturenbrett 11 sitzenden Steuerung 12 in Verbindung. Mit dieser ist wiederum ein im Blickfeld des Fahrers liegendes Warnlicht 13 gekoppelt. Ein weiteres Warnlicht kann - wie nicht näher dargestellt ist - an dem dem Fahrer zugewandten Rand des Spiegelgehäuses 6 angeordnet sein.

In den Fig. 1, 2 und 4 ist durch Fächerschraffuren das Strahlungsfeld 14 des Infrarot-Bewegungsmelders 5 angedeutet. Bezogen auf die Horizontalebene (Fig. 1) überstreicht es einen Winkelbereich W_{H} von 180°, dessen Grenzen etwa parallel zur Fahrzeuglängsrichtung liegen. Bezogen auf die Vertikalebene (Fig. 2) überstreicht das Strahlungsfeld 14 einen Winkelbereich W_{V} von etwa 160°, wobei die nach vorne verlaufenden Strahlungsfeldbegrenzung in einem Winkel W_{N} von etwa 20° nach unten gegenüber der Horizontalen geneigt ist.

Mit dem beschriebenen Strahlungsfeld 14 wird die gesamte auf der Beifahrerseite des Nutzfahrzeuges liegende Zone (nicht nur die Totwinkelbereiche des Rückblickspiegels 2) überwacht. Steht das Nutzfahrzeug 1 beispielsweise an einer Ampel und es fährt in diese Zone ein Fahrradfahrer ein, wird dies vom Infrarot-Bewegungsmelder 5 registriert, der ein entsprechende Signal an die Steuerung 12 abgibt. Diese aktiviert das Warnlicht 13 und gegebenenfalls einen zusätzlich vorhandenen Warnsummer 15 im Armaturenbrett, so daß der Fahrer des Nutzfahrzeugs veranlaßt wird, in den Rückblickspiegel 2 zu schauen und den Fahrradfahrer wahrzunehmen. Entsprechende Warnmechanismen laufen ab, wenn das Nutzfahrzeug 1 z.B. an einer Straßeneinmündung nach rechts abbiegt, wo der Fahrer Gefahr laufen kann, einen sich rechts vom Nutzfahrzeug bewegenden Fahrradfahrer zu übersehen. Dieser wird ebenfalls vom Infrarot-Bewegungsmelder 5 erfaßt und in der beschriebenen Weise von der Überwachungseinrichtung dem Fahrer gemeldet.

Um die eingangs erwähnte Überfrachtung des Fahrers durch Warnsignale zu unterbinden, ist die Überwachungseinrichtung aufgrund der Steuerung 12 so ausgelegt, daß der Infrarot-Bewegungsmelder 5, das Warnlicht 13 und der Warnsummer 15 nur aktiviert werden, wenn sich das Nutzfahrzeug 1 mit einer Geschwindigkeit zwischen Fahrzeugstillstand und einer Grenzgeschwindigkeit von 25 km/h bewegt. Dazu wird die Steuerung 12 in nicht näher dargestellter Weise mit einem für die Fahrzeuggeschwindigkeit repräsentativen Signal versorgt.

Wie in Fig. 1 zusätzlich angedeutet ist, ist an der Fahrzeugfront 16 des Nutzfahrzeuges 1 ein weiterer Infrarot-Bewegungsmelder 17 angeordnet, dessen Strahlungsfeld 18 den vor der Fahrzeugfront liegenden Totwinkelbereich überwacht. Auch dieser Infrarot-Bewegungsmelder 17 wird über die Steuerung 12 betrieben.

In Fig. 2 ist ein Reisebus 19 mit einem beifahrerseitigen Hauptspiegel 20 moderner Bauart dargestellt, der sich weit nach vorne über die Fahrzeugfront 16 hinaus erstreckt. Der am unteren Ende des Hauptspiegels 20 angeordnete Infrarot-Bewegungsmelder 21 kann nun von seinem Strahlungsfeld her so ausgelegt werden, daß er gleichzeitig sowohl den Totwinkelbereich vor der Fahrzeugfront 16, also auch die Zone längs der Beifahrerseite des Reisebusses 19 überwacht. Insofern beträgt also der Erfassungswinkel W_{V} bezogen auf die Vertikalebene etwa 270°.

Der Vollständigkeit halber wird unter Bezugnahme auf Fig. 4 und 5 abschließend der Aufbau des Rückblickspiegels 2 kurz erläutert. Zentrales Teil ist eine Lagerplatte 22, die über zwei Klemmschellen 23 mit der in Fig. 4 lediglich strichliert angedeuteten Spiegelstange 24 verbunden ist. Von der Fahrtrichtungsseite her ist auf die Lagerplatte 22 ein Gehäuseteil 25 mit seinem Boden 28 geschraubt, das das eigentliche Spiegelbauteil 26 rahmenförmig umgibt. Am unteren Rand dieses Gehäuseteils 25 ist der Lagervorsprung 7 für den Infrarot-Bewegungsmelder 5 angeformt.

Auf das Gehäuseteil 25 ist von der Fahrtrichtungsseite her die Abdeckung 27 für die Klemmschellen 23 und den Boden 28 des Gehäuseteils 25 aufgerastet.

Das Spiegelbauteil 26 ist über ein elektromotorisches Verstellaggregat 29 an die Lagerplatte 22 angebunden. Es besteht aus einer Spiegelhalteplatte 30, auf die unter Zwischenlage einer nicht näher dargestellten Heizfolie die eigentliche Spiegelscheibe 31 aufgeklebt ist. In Fig. 4 ist lediglich der elektrische Anschluß 32 für die Spiegelheizung dargestellt.

## Patentansprüche

1. Überwachungseinrichtung für schwer oder nicht einsehbare Zonen um Kraftfahrzeuge, insbesondere für die Beifahrerseite von Nutzfahrzeugen (10), mit
- einem Erfassungssensor (5) zur Erfassung eines sich in der überwachten Zone aufhaltenden Objekts,
- einer Steuerung (12) für den Betrieb des Sensors (5) und die Verarbeitung der vom Sensor (5) erzeugten Signale und
- einer vom Fahrzeugführer wahrnehmbaren Warnanzeige (13, 15), die dem Fahrzeugführer ein Ansprechen des Sensors (5) auf ein in der überwachten Zone erfaßtes Objekt signalisiert,
**dadurch gekennzeichnet, daß**
- die Überwachungseinrichtung derart ausgelegt ist, daß der Sensor (5) und/oder die Warnanzeige (13, 15) nur in einem Geschwindigkeitsbereich des mit der Überwachungseinrichtung versehenen Kraftfahrzeuges zwischen Fahrzeugstillstand und einer vorgegebenen Grenzgeschwindigkeit zwischen 15 km/h und 30 km/h, vorzugsweise 25 km/h arbeitet.

2. Überwachungseinrichtung nach Anspruch 1 **dadurch gekennzeichnet, daß** der Erfassungssensor (5) in einen der beifahrerseitigen Rückblickspiegel (2) eingebaut ist.

3. Überwachungseinrichtung nach Anspruch 1 oder 2, **dadurch gekennzeichnet, daß** der Erfassungssensor ein Strahlungssensor (5) ist.

4. Überwachungseinrichtung nach Anspruch 3, **dadurch gekennzeichnet, daß** der Strahlungssensor ein Infrarot-Bewegungsmelder (5) ist.

5. Überwachungseinrichtung nach Anspruch 1 oder 2, **dadurch gekennzeichnet, daß** der Erfassungssensor ein Ultraschallsensor ist,

6. Überwachungseinrichtung nach einem der Ansprüche 1 bis 5, **dadurch gekennzeichnet, daß** die Warnanzeige eine optische Anzeige (13) ist.

7. Überwachungseinrichtung nach Anspruch 6, **dadurch gekennzeichnet, daß** optische Anzeigen (13) in das Armaturenbrett (11) des Fahrzeuges (1) und/oder den Spiegel (2) eingebaut ist.

8. Überwachungseinrichtung nach einem der Ansprüche 1 bis 7, **dadurch gekennzeichnet, daß** die Warnanzeige eine akustische Anzeige (15) ist.

9. Überwachungseinrichtung nach einem der Ansprüche 1 bis 8, **dadurch gekennzeichnet, daß** ein Erfassungssensor (21) zur Überwachung des vor der Fahrzeugfront (16) des Fahrzeuges (1) liegenden Totwinkelbereichs vorgesehen ist.

## Claims

1. A control equipment for zones hardly or not at all surveyable around vehicles, in particular for the co-driver's side of utility vehicles, comprising
- a sensor (5) for the detection of an object staying in the controlled zone,
- a control unit (12) for the operation of the sensor (5) and for processing the signals generated by the sensor (5), and
- a warning signaler (13, 15) perceivable by the driver, signaling to the driver the sensor's (5) reaction to an object detected in the controlled zone,
**characterized in that**
- the control equipment is designed such that the sensor (5) and/or the warning signaler (13, 15) only work in a range of speed of the vehicle provided with the control equipment between the standstill of the vehicle and a given limit speed ranging from 15 km/h to 30 km/h, preferably 25 km/h.

2. A control equipment according to claim 1, **characterized in that** the sensor (5) is incorporated in an external rear-view mirror (2) on the codriver's side.

3. A control equipment according to claim 1 or 2, **characterized in that** the sensor is a radiation sensor (5).

4. A control equipment according to claim 3, **characterized in that** the radiation sensor is an infrared motion sensor (5).

5. A control equipment according to claim 1 or 2, **characterized in that** the sensor is an ultrasonic sensor.

6. A control equipment according to one of claims 1 to 5, **characterized in that** the warning signaler is an optical signaler (13).

7. A control equipment according to claim 6, **characterized in that** optical signalers (13) are integrated in the dashboard (11) of the vehicle (1) and/or the mirror (2).

8. A control equipment according to one of claims 1 to 7, **characterized in that** the warning signaler is an acoustic signaler (15).

9. A control equipment according to one of claims 1 to 8, **characterized in that** a sensor (21) is provided for the control of the blind angle zone before the front (16) of the vehicle (1).

## Revendications

1. Dispositif de surveillance de zones non-visibles ou difficilement visibles autour de véhicules, en particulier pour le côté passager de véhicules utilitaires (10) avec
- un capteur de détection (5) pour la détection d'un objet séjournant dans la zone surveillée,
- une commande (12) pour la mise en oeuvre du capteur (5) et pour le traitement des signaux produits par le capteur (5) et
- un élément avertisseur (13, 15) perceptible par le conducteur du véhicule lui signalant une réponse du capteur (5) à un objet détecté dans la zone surveillée, **caractérisé en ce que**
- le dispositif de surveillance est conçu de telle façon que le capteur (5) et/ou l'élément avertisseur (13, 15) ne fonctionnent que dans une plage de vitesse du véhicule automobile muni du dispositif de surveillance qui est située entre l'arrêt du véhicule et une vitesse limite imposée de 15 km/h à 30 km/h, de préférence de 25 km/h.

2. Dispositif de surveillance selon la revendication 1, **caractérisé en ce que** le capteur de détection (5) est monté dans un des rétroviseurs (2) se trouvant du côté passager.

3. Dispositif de surveillance selon la revendication 1 ou 2, **caractérisé en ce que** le capteur de détection est un capteur de rayonnement (5).

4. Dispositif de surveillance selon la revendication 3, **caractérisé en ce que** le capteur de rayonnement est un capteur de mouvement à infrarouges (5).

5. Dispositif de surveillance selon la revendication 1 ou 2, **caractérisé en ce que** le capteur de détection est un capteur à ultrasons.

6. Dispositif de surveillance selon l'une quelconque des revendications 1 à 5, **caractérisé en ce que** l'élément avertisseur est un indicateur optique (13).

7. Dispositif de surveillance selon la revendication 6, **caractérisé en ce que** des indicateurs optiques (13) sont montés dans le tableau de bord (11) du véhicule (1) et/ou dans le rétroviseur (2).

8. Dispositif de surveillance selon l'une quelconque des revendications 1 à 7, **caractérisé en ce que** l'élément avertisseur est un indicateur acoustique (15).

9. Dispositif de surveillance selon l'une quelconque des revendications 1 à 8, **caractérisé en ce qu'**un capteur de détection (21) est prévu pour la surveillance de la zone de l'angle mort se trouvant devant le front (16) du véhicule (1).
